## Europäisches Patentamt
## European Patent Office
## Office européen des brevets

(19)

(11) Numéro de publication: **0 127 534**
**B1**

(12) **FASCICULE DE BREVET EUROPEEN**

(45) Date de publication du fascicule du brevet: **16.01.91**

(51) Int. Cl.⁵: **G 09 B 5/04,** G 09 B 19/06

(21) Numéro de dépôt: **84401042.1**

(22) Date de dépôt: **18.05.84**

(54) **Appareil d'entraînement à la pratique d'une langue maternelle ou étrangère, en vue de son assimilation intégrale.**

(30) Priorité: **20.05.83 FR 8308383**

(43) Date de publication de la demande:
**05.12.84 Bulletin 84/49**

(45) Mention de la délivrance du brevet:
**16.01.91 Bulletin 91/03**

(84) Etats contractants désignés:
**AT BE CH DE GB IT LI LU NL SE**

(56) Documents cités:
**FR-A-2 109 436**
**FR-A-2 475 771**
**US-A-3 703 041**
**US-A-4 020 567**

(73) Titulaire: **Tomatis, Alfred Ange Auguste**
**68 Boulevard de Courcelles**
**F-75017 Paris (FR)**

(72) Inventeur: **Tomatis, Alfred Ange Auguste**
**68 Boulevard de Courcelles**
**F-75017 Paris (FR)**

(74) Mandataire: **Altenburg, Udo, Dipl.-Phys. et al**
**Patent- und Rechtsanwälte Bardehle-**
**Pagenberg-Dost-Altenburg Frohwitter-Geissler**
**& Partner Postfach 86 06 20**
**D-8000 München 86 (DE)**

Courier Press, Leamington Spa, England.

## Description

La présente invention concerne un appareil d'entraînement à la pratique d'une langue maternelle ou étrangère, en vue de sen assimilation intégrale.

On connaît déjà des appareils destinés à l'assimilation d'une langue étrangère. Ces appareils comportent généralement un lecteur d'une bande magnétique sur laquelle sont préablement enregistrées, avec l'intonation correcte, des phrases exprimées dans la langue étrangère devant être assimiliée. La sortie de ce lecteur de bande est reliée à des écouteurs placés sur les oreilles du sujet devant apprendre la langue et ce sujet est ainsi amené à prononcer plusieurs fois de suite chaque phrase qu'il entend à partir du lecteur de bande magnétique, jusqu'à ce que sa prononciation devienne correcte. Toutefois, l'appréciation de la qualité de la prononciation par le sujet exige la présence d'une tierce personne ayant pour langue maternelle la langue en cours d'assimilation et une telle façon de faire présente donc, de ce fait, un inconvénient important, puisque l'entraînement à la pratique de la langue étrangère ne peut pas être effectué d'une manière totalement autonome.

Pour remédier à cet inconvénient, on a proposé, dans le document FR—A—2 475 771, un dispositif d'enseignement automatique d'une langue comportant une source de messages sonores de référence, des moyens pour recevoir les messages prononcés par l'élève, et un circuit d'analyse et de comparaison permettant de comparer ces deux types de messages suivant un paramètre particulier, chaque message sonore de référence étant réptété tant que la prononciation n'est pas satisfaisante, c'est-à-dire tant que le message prononcé par l'élève ne concorde pas, à un degré d'approximation près, avec le message de référence émis.

Toutefois, dans ce dispositif connu, le degré d'approximation n'est pas réglable, ce qui est particulièrement gênant suivant le paramètre particulier considéré.

La présente invention vise à remédier à ces inconvénients en procurant un appareil automatique permettant une intégration parfaite d'une langue, maternelle ou étrangère, sans nécessiter l'intervention d'une tierce personne et permettant de faire varier le degré d'approximation lors de la comparaison.

A cet effet cet appareil d'entraînement à la pratique d'une langue maternelle ou étrangère, en vue de son assimilation intégrale, comportant un générateur de signaux types constitué par un support mobile d'enregistrements sonores sur lequel sont enregistrés préalablement, indépendamment les uns des autres, des blocs d'informations sonores, tels que des phrases ou des mots, exprimés dans la langue devant être assimilée par un sujet et un lecteur de ces blocs d'information émettant les signaux types, un transducteur électroacoustique connecté au générateur de signaux types et émettant sous forme sonore les blocs d'informations types de manière que ceux-ci soient entendus par le sujet, un microphone dans lequel parle le sujet, des moyens associés au microphone pour créer des signaux vocaux correspondant aux sons émis par le sujet, et un circuit d'analyse et de comparaison des signaux types et des signaux vocaux, caractérisé en ce que ce circuit l'analyse et de comparaison est constitué de plusieurs comparateurs à deux entrées et d'un étange de sortie, chacun de ces comparateurs ayant une première entrée connectée à la sortie du générateur de signaux types et une seconde entrée connectée au microphone, de manière à pouvoir effectuer, en ce qui concerne l'une de plusieurs paramètres, tels que l'intensité, le rythme, la pente et l'étendue de la bande passante, le temps de latence, le temps de précession, l'attaque des sons, le lâcher des sons, etc. une comparaison élémentaire entre le signal type émis par le générateur de signaux types et le signal vocal correspondant au message sonere prononcé par le sujet, en réponse à l'audition dubloc d'information type émis et comporte des moyens de réglage permettant d'adjuster séparement, pour chacun desdits comparateurs, la plage de comparaison dans laquelle le résultat de la comparaison est considéré come bon, l'étage de sortie étant connecté aux divers comparateurs et au générateur de signaux types de manière à provoquer l'émission, par le générateur de signaux types, du même signal type tant que le signal vocal produit par le microphone, lorsque le sujet répète dans celui-ci le message sonore qu'il vient d'entendre, ne concorde pas, à un degré d'approximation déterminée réglable près, avec le signal type en ce qui concerne le ou les paramètres pris en considération.

Suivant une caractéristique complémentaire de l'invention les divers comparateurs sont connectés en cascade, par l'intermédiaire de porte ET, et le dernier comparateur est connecté à l'étage de sortie de manière à émettre un signal de commande appliqué à celui-ci, pour provoquer l'émission d'un nouveau signal type suivant, uniquement lorsque les comparaisons effectuées par les divers comparateurs, en ce qui concerne les paramètres respectifs pris en considération par l'analyse, ont toutes donné des résultats satisfaisants.

On décrira ci-après, à titre d'exemple non limitatif, une forme d'exécution de la présente invention, en référence au dessin annexé sur lequel:

La figure 1 est un schéma synoptique d'un appareil d'entraînement à la pratique d'une langue maternelle ou étrangère suivant l'invention.

La figure 2 est un diagramme illustrant le fonctionnement de l'appareil de la figure 1.

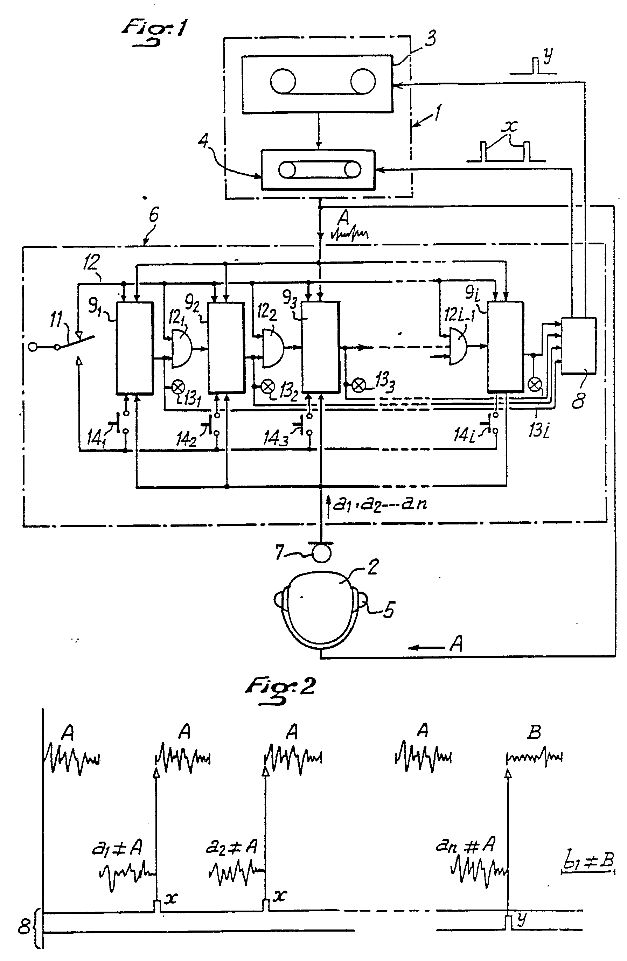

L'appareil suivant l'invention dont le schéma synoptique est représenté sur la figure 1, comporte un générateur de signaux types ou de référence correspondant à des blocs d'informations types ou encore des messages types, ce générateur étant désigné dans son ensemble par la référence 1. Ce générateur comprend au moins un support d'enregistrement sonore mobile sur lequel sont enregistrés préalablement, indépendamment les uns des autres, les blocs d'informations ou messages types, tels que des phrases ou des mots, exprimés dans la langue devant être assimilée par un sujet 2. Le générateur 1 peut comporter, par exemple, un premier magnétophone 3 sur la bande magnétique duquel sont enregistrés, à la suite les uns des autres, les blocs d'informations types. La sortie de ce magnétophone 3 est connectée à un second magnétophone 4 du type à boucle destiné à enregistrer un seul des blocs d'informations types élémentaires préablement stockés sur la bande magnétique du premier magnétophone 3, et à répéter successivement ce même bloc d'information, pendant le processus d'acquisition de la langue.

Les deux magnétophones 3 et 4 pourraient être également remplacés par un seul et unique magnétophone, à condition que ce dernier puisse être commandé automatiquement en marche arrière rapide et limitée pour permettre d'émettre plusieurs fois de suite, à sa sortie, le même signal type correspondant à un bloc d'information type déterminé.

Par ailleurs on pourrait également utiliser, à la place des magnétophones 3 et 4, tout autre appareil d'enregistrement sonore à support d'enregistrement mobile permettant de stocker plusieurs blocs d'informations ou messages types les uns à la suite des autres et d'émettre successivement, plusieurs fois de suite, le même signal type correspondant à un bloc d'information.

La sortie du générateur de signaux types 1 est connectée, d'une part, à un transducteur électroacoustique 5, tel que des écouteurs placés sur les oreilles du sujet 2 devant assimiler la langue en cours d'étude ou encore un haut parleur, et, d'autre part, à un circuit d'analyse et de comparaison désigné dans son ensemble par la référence 6.

Par ailleurs, l'appareil comporte un microphone 7 également connecté au circuit d'analyse et de comparaison 6 lequel comprend un étage de sortie 8 connecté au générateur de signaux types 1.

Le mode de fonctionnement générale de l'appareil qui vient d'être décrit est le suivant:

au début du processus d'acquisition de la langue, le générateur de signaux types 1 émet à sa sortie un signal type ou de référence A, comme il apparaît sur la figure 2, correspondant à un bloc d'information constitué, par exemple, par une phrase ou un mot préalablement enregistré sur la bande magnétique du magnétophone principal 3. Cette phrase ou ce mot est ensuite transféré sur la bande magnétique du magnétophone à boucle 4 de manière à pouvoir être émis d'une manière répétée. Le magnétophone à boucle 4 émet donc à sa sortie un signal type A, analogique ou numérique, d'amplitude variable dans le temps et qui constitue en quelque sorte un signal de référence puisqu'il correspond à la prononciation parfaite, dans la langue considérée, de la phrase ou du mot que devra ensuite prononcer correctement le sujet 2 soumis à l'apprentissage. Le signal type A est appliqué, comme on l'a vu précédemment, à la fois au circuit d'analyse et de comparaison 6 et aux écouteurs 5. Par conséquent le sujet 2 entend la phrase ou le mot émis d'une manière correcte et il essaye de répéter cette phrase ou ce mot de la façon la plus précise possible. Par conséquent, après avoir entendu la phrase ou le mot type au moyen des écouteurs 5, le sujet 2 prononce cette même phrase ou ce même mot, ce qui se traduit par la production, par le microphone 7, d'un signal vocal $a_1$ concordant plus ou moins avec le signal type A. Au début du processus d'acquisition de la langue, le signal vocal $a_1$ émis par le sujet 2 est évidemment assez différent du signal type A et le circuit d'analyse et de comparaison 6 détecte cette différence. Ce cuircuit, qui sera décrit en détail plus loin, agit alors sur l'étage de sortie 8, pour que celui-ci émette un signal $\times$ appliqué au générateur 1, signal provoquant une nouvelle émission du même signal type A par le magnétophone à boucle 4.

Le même processus que précédemment décrit se déroule alors, le sujet 2 émettant, en réponse au deuxième signal type A qu'il vient de recevoir, un deuxième signa vocal $a_2$ plus proche du signal type A mais encore différent de celui-ci. Par conséqent le circuit d'analyse et de comparaison 6 émet encore, par l'intermédiaire de son étage de sortie 8, le signal de commande appliqué au génerateur 1 qui délivre alors, comme précédemment, le même signal type A.

Le processus ci-dessus se répète et chaque fois le sujet améloire la prononciation du mot ou de la phrase constituant le signal type A jusqu'à ce que ce mot ou cette phrase concorde, à un certain degré d'approximation près, avec le signal type A. A ce moment le circuit d'analyse et de comparaison 6 détecte la concordance totale ou approximativeentre le signal vocal $a_n$ émis par le sujet 2 et le signal type A et par l'intermédiaire de son étage de sortie 8, il émet alors un second signal de commande y qui est appliqué au générateur 1 et qui provoque le remplacement, sur le magnétophone à boucle 4, du premier bloc d'information type, correspondant au signal type A, par un nouveau bloc d'information, correspondant à un nouveau signal type B. A partir de ce moment le générateur 1 émet d'un manière repétée, à sa sortie, le second signal type B et le processus d'analyse et de comparaison se poursuit comme précédemment, le premier signal vocal $b_1$ émis par le sujet 2 étant comparé avec le signal type B et ainsi de suite.

On décrira maintenant, d'une manière détaillée, une forme d'exécution du circuit d'analyse et de comparaison 6. Ce circuit comporte un ensemble de comparateurs à deux entrées $9_1$, $9_2$, $9_3$ . . $9_i$ qui sont associés respectivement aux divers paramètres suivant lesquels doivent être effectuées les comparaisons élémentaires entre les signaux types, tels que le signal type A, et les signaux vocaux $a_1$, $a_2$ . . $a_n$ émis par le sujet 2. Par exemple le premier comparateur $9_1$ compare les signaux appliqués à ses deux entrées du point de vue intensité, le deuxième comparateur $9_2$ les com-

pare en ce qui concerne le rythme, le troisième comparateur $9_3$ les compare en ce qui concerne la largeur de la bande passante, le comparateur $9_i$ effectuant la comparaison en ce qui concerne les pentes des bandes passantes. Pour chacun des paramètres sur lesquels on effectue ces comparaisons on peut déterminer à priori une marge d'erreur plus ou moins grande et pour cela on peut faire varier, pour chacun des comparateurs, la plage dans laquelle le résultat de la comparaison est considéré comme étant bon. A cet effet chacun des comparateurs $9_1 .. 9_i6$ peut être pourvu d'un bouton de réglage permettant d'ajuster l'étendue de cette plage. On peut donc régler à volonté, si l'on veut être de plus en plus exigeant en ce qui concerne l'acquisition de la langue, la plage de manière que le pourcentage d'erreur toléré aille en diminuant pour être finalement égale à 0%, dans le cas idéal.

Deux modes de fonctionnement peuvent être envisagés pour le circuit d'analyse et de comparaison 6, à savoir un fonctionnement avec passage automatique de la comparaison d'un paramètre à la comparaison d'un autre paramètre ou au contraire avec une sélection manuelle, au moyen de bouton-s-poussoirs, du ou des comparateurs devant seuls intervenir pour déterminer le degré d'acquisition de la langue.

On peut utiliser, à cet effet, un commutateur à deux positions 11, qui, dans une première position, ainsi qu'il est représenté sur la figure 1, rend opérationnels tous les comparateurs $9_1 \ldots 9_i$, du fait qu'un conducteur commun 12, relié à des entrées d'alimentation de tous ces comparateurs, se trouve alors connecté à une source de tension de polarité appropriée. Ce conducteur commun 12 est également relié à des premières entrées de portes ET $12_1$, $12_2 \ldots 12_{i-1}$, à deux entrées. Ces portes ET sont disposées entre les comparateurs successifs de manière à les relier en cascade, et leurs secondes entrées sont reliées respectivement à la sortie du comparateur situé en amont dans la chaîne ds comparateurs. Par exemple la première porte ET $12_1$ dont la sortie est reliée à une entrée d'autorisation du deuxième comparateur $9_2$, est connectée, par sa seconde entrée, à la sortie du premier comparateur $9_1$.

Aux sorties des divers comparateurs sont également reliées des lampes témoins $13_1$, $13_2 \ldots 13_i$ qui s'allument pour indiquer que la comparaison entre le signal type A et le signal vocal émis $a_1$, $a_2$ ... ou $a_n$, dans le comparateur considéré, a donné un résultat satisfaisant. Autrement dit chacune des lampes $13_1 \ldots 13_i$ donne une indication visuelle du résultat de la comparaison effectuée par les divers comparateurs $9_1 \ldots 9_i$.

Par ailleurs les sorties des divers comparateurs $9_1$, $9_2 \ldots 9_i$ sont connectées à l'étage de sortie 8 pour commander l'émission des signaux x et y comme on l'a vu précédemment.

Chacun des comparateurs peut être aussi rendu actif individuellement, grâce à la prévision d'interrupteurs à bouton-poussoir $14_1$, $14_2 \ldots 14_i$ reliés à des entrées d'alimentation des comparateurs respectifs $9_1$, $9_2 \ldots 9_i$ et qui sont connectés en commun à un second pôle du commutateur 11. Autrement dit lorsque ce commutateur 11 se trouve dans sa seconde position, tous les interrupteurs à bouton-poussoir $14_1 \ldots 14_i$ sont connectés à la source de tension de polarité appropriée, et par conséquent il est possible de rendre actif, à volonté, un ou plusieurs des comparateurs, en fermant le ou les interrupteurs correspondants parmi l'ensemble des interrupteurs à bouton-poussoir $14_1 \ldots 14_i$.

On expliquers maintenant d'une manière détaillée le fonctionnement de l'appareil qui vient d'être décrit, en considérant le cas où cet appareil fonctionne avec un passage automatique d'un étage de comparaison à l'étage suivant.

Au début seul le premier comparateur $9_1$ se trouve être actif. Par conséquent le premier comparateur $9_1$ intervient pour comparer le premier signal type A avec les signaux vocaux $a_1$, $a_2 \ldots a_n$ émis successivement par le sujet 2 devant le microphone 7. Le premier comparateur $9_1$ peut effectuer, par exemple, une comparaison des niveaux d'intensité des signaux et lorsque le seuil fixé pour la comparaison est atteint, émet à sa sortie un signal qui provoque d'une part l'allumage de la première lampe témoin $13_1$ et d'autre part le déblocage de la première porte ET $12_1$. L'allumage de la lampe $13_1$ indique alors que l'assimilation de la langue s'est effectuée d'une manière correcte en ce qui concerne l'intensité des signaux et que l'on peut ensuite passer à la comparaison d'un deuxième paramètre. Comme on l'a vu précédemment le seuil de comparaison peut être ajusté à volonté: autrement dit on peut faire en sorte que le premier comparateur $9_1$ émette à sa sortie un signal lorsque le niveau d'intensité du signal vocal émis $a_n$, par exemple, a atteint 90 ou 95% du niveau du signal type A.

Une fois que le comparateur $9_1$ a basculé dans un état indiquant que le signal vocal émis remplit bien la condition posée, par rapport au signal type A, en ce qui concerne le premier paramètre fixé par le premier comparateur $9_1$, la première porte $12_1$ est débloquée et c'est alors le deuxième comparateur $9_2$ qui intervient au cours de la suite du processus d'acquisition de la langue. Autrement dit le deuxième comparateur $9_2$ compare le signal type A avec chacun des signaux vocaux émis successivement et il effectue par exemple, une comparaison de leurs rythmes. Lorsque le rythme du signal vocal émis est jugé correspondre, dans les limites prédéterminées, au signal type A, le deuxième comparateur $9_2$ émet à sa sortie un signal indiquant que le seuil fixé pour la comparaison du deuxième paramètre a été atteint. Ce signal provoque comme précédemment l'allumage de la Imape $13_2$ indiquant que le rythme du signal vocal émis est bon et débloquant également la deuxième porte $12_2$.

On voit donc, d'après ce qui précède, que les divers paramètres sont pris successivement en considération pour la comparaison du signal type A et des signaux vocaux émis $a_1$, $a_2 \ldots a_n$ jusqu'à ce qu'intervienne le dernier comparateur $9_i$. Lorsque celui-ci émet à sa sortie un signal indiquant que le seuil fixé pour la comparaison du dernier paramètre considéré est atteint, à ce moment l'étage de sortie 8 émet le signal y provoquant le remplacement du premier signal type A par le deuxième signal type B et le processus se poursuit de la même façon.

Par contre en mode manuel, on place le commutateur 11 dans sa seconde position et on sélectionne, par un ou plusieurs des interrupteurs à bouton-poussoir $14_1 \ldots 14_i$, un ou plusieurs des comparateurs $9_1 \ldots 9_i$ devant effectuer la comparaison du signal type A et des signaux vocaux émis $a_1 \ldots a_n$ uniquement en ce qui concerne un ou plusieurs paramètres déterminés.

Lorsque l'appareil suivant l'invention fonctionne d'une manière automatique avec tous les comparateurs connectés en cascade, les comparaisons élémentaires successives peuvent s'effectuer dans n'importe quel ordre. Autrement dit on peut commencer, dans le premier comparateur $9_1$, par une comparaison élémentaire relative à l'un quelconque des paramètres retenus pour l'analyse et enchaînés ensuite dans le deuxième comparateur $9_2$, par une comparaison relative à un autre paramètre quelconque.

Naturellement on peut prévoir additionnellement, dans le circuit d'analyse et de comparaison 6, une mémoire pour stocker en permanence chacun des signaux types A, B . . . pendant toute la période de temps durant laquelle sont effectuées les diverses comparaisons élémentaires par less comparateurs $9_1, 9_2 \ldots 9_i$.

L'appareil suivant l'invention peut comporter également un dispositif de visualisation à l'écran, permettant de suivre l'évolution de l'acquisition de la langue.

Naturellement on peut éventuellement brancher, entre le générateur de signaux types 1 et les écouteurs 5, un appareil de conditionnement de l'audition à filtres dont les caractéristiques de transmission sont adaptées au traitement subit par le sujet.

**Revendications**

1. Appareil d'entraînement à la pratique d'une langue maternelle ou étrangère, en vue de son assimilation intégrale, comportant un générateur (1) de signaux types (A) constitué par un support mobile (3), d'enregistrements sonores sur lequel sont enregistrés préalablement, indépendamment les uns des autres, des blocs d'informations sonores, tels que des phrases ou des mots, exprimés dans la langue devant être assimilée par un sujet et un lecteur (4) de ces blocs d'information émettant les signaux types, un transducteur électroacoustique (5) connecté au générateur de signaux types et émettant sous forme sonore les blocs d'informations types de manière que ceux-ci soient entendus par le sujet, un microphone (7) dans lequel parle le sujet, des moyens associés au microphone pour créer des signaux vocaux ($a_1, a_2 \ldots a_n$) correspondant aux sons émis par le sujet, et un circuit d'analyse et de comparaison (6), des signaux types et des signaux vocaux, caractérisé en ce que ce circuit d'analyse et de comparaison (6) est constitué de plusieurs comparateurs à deux entrées ($9_1, 9_2 \ldots 9_i$) et d'un étage du sortie (8), chacun de ces comparateurs ayant une première entrée connectée à la sortie du générateur de signaux types (1) et une seconde entrée connectée au microphone (7), de manière à pouvoir effectuer, en ce qui concerne l'un de plusieurs paramètres, tels que l'intensité, le rythme, la pente et l'étendue de la bande passante, le temps de latence, le temps de précession, l'attaque des sons, le lâcher des sons, etc. une comparaison élémentaire entre le signal type (A) émis par le générateur de signaux types (1) et le signal vocal ($a_1, a_2 \ldots a_n$) correspondant au message sonore prononcé par le sujet (2) en réponse à l'audition dubloc d'information type émis et comporte des moyens de réglage permettant d'adjuster séparement, pour chacun desdits comparateurs, la plage de comparaison dans laquelle le résultat de la comparaison est considéré comme bon, l'étage de sortie (8) étant connecté aux divers comparateurs ($9_1, 9_2 \ldots 9_i$) et au générateur de signaux types (1) de manière à provoquer l'émission, par le générateur de signaux types (1), du même signal type (A) tant que le signal vocal produit par le microphone (7), lorsque le sujet répète dans celui-ci le message sonore qu'il vient d'entendre, ne concorde pas, à un degré d'approximation déterminée réglable près, avec le signal type (A) en ce qui concerne le ou les paramètres pris en considération.

2. Appareil suivant la revendication 1, caractérisé en ce que les divers comparateurs ($9_1, 9_2 \ldots 9_i$) sont connectés en cascade, par l'intermédiaire de protes ET ($12_1, 12_2 \ldots 12_{i-1}$) et le dernier comparateur ($9_i$) est connecté à l'étage de sortie (8) de manière à émettre un signal de commande (y) appliqué à celui-ci, pour provoquer l'émission d'un nouveau signal type suivant (B) uniquement lorsque les comparaisons effectuées par les divers comparateurs ($9_1, 9_2 \ldots 9_i$) en ce qui concerne les paramètres respectifs pris en considération par l'analyse, ont toutes donné des résultats satisfaisants.

3. Appareil suivant l'une quelconque des revendications prédédentes, caractérisé en ce qu'une lampe témoin ($13_1, 13_2 \ldots 13_i$) est connectée à la sortie de chacun des comparateurs ($9_1, 9_2 \ldots 9_i$).

4. Appareil suivant l'une quelconque des revendications précédentes, caractérisé en ce que tous les comparateurs ($9_1, 9_2 \ldots 9_i$) sont connectés, par des entrées d'alimentation et un conducteur commun (12), à un pôle d'un commutateur (11) relié à une source de tension de polarité appropriée.

5. Appareil suivant la revendication 4, caractérisé en ce que l'autre pôle du commutateur (11) est connecté, par l'intermédiaire d'interrupteurs à boutons-poussoirs individuels ($14_1, 14_2 \ldots 14_i$), à des entrées d'alimentation des comparateurs respectifs ($9_1, 9_2 \ldots 9_i$).

6. Appareil suivant l'une quelconque des revendications précédentes, caractérisé en ce que lesdits moyens de réglage de la plage de comparaison comportent un bouton de réglage associé à chaque comparateur.

## Patentansprüche

1. Übungsgerät zum praktischen Erlernen und zur vollständigen Beherrschung einer Muttersprache oder eine Fremdsprache, das aufweist: einen Generator (1) zum Erzeugen von Standardsignalen (A), der aus einem beweglichen Tonaufnahmeträger besteht, auf dem Klanginformationsblöcke, wie z.B. Sätze und Wörter, die in der Sprache ausgredrückt werden, die von einer Person erlernt werden soll, vorher unabhängig voneinander aufgezeichnet worden sind, und eine Lesvorrichtung (4) zum Lesen dieser Informationsblöcke, die die Standardsignale aussendet, einen elektroakustischen Wandler (5), der mit dem Generator von Standardsignalen verbunden ist und die Blöcke von Standardinformation als Klang aussendet, so daß sie von der Person gehört werden, ein Mikrofon (7), in welches die Person spricht, Einrichtungen, die mit dem Mikrofon verbunden sind, um Sprachsignale ($a_1, a_2 \ldots a_n$) zu ereugen, die den durch die Person imitierten Klängen entsprechen, und eine Schaltung (6) zum Analysieren und Vergleichen der Standardsignale und der Sprachsignale, dadurch gekennzeichnet, daß die Analyse- und Vergleichsschaltung (6) aus einer Vielzahl von Vergleichern, die zwei Eingänge ($9_1, 9_2 \ldots 9_i$) aufweisen, und einer Ausgangsstufe (8) besteht, wobei jeder Vergleicher einen ersten Eingang, der mit dem Ausgang des Generators (1) von Standardsignalen verbunden ist, und einen zweiten Eingang, der mit dem Mikrofon (7) verbunden ist, um bezüglich einer von einer Vielzahl von Parametern, so wie die Intensität, der Rhythmus, die Steilheit und die Breite des Durchlaßbandes, die Latenzzeit, die Präzisionszeit, der Klanganfang, der Klangabfall, etc. einen elementaren Vergleich zwischen dem Standardsignal (A), das durch den Generator (1) von Standardsignalen ausgesendet wird, und dem Sprachsignal ($a_1, a_2 \ldots a_n$), das der Klangnachricht, di durch die Person (2) in Antwort auf das Hören des ausgesandten Blockes von Standardinformation, entspricht, bewirken zu können, und Einstellungseinrichtungen, die es für jeden der Vergleicher erlauben, de Vergleichsbereich getrennt einzustellen, in dem das Vergleichsergebnis als gut betrachtet wird, wobei die Ausgangsstufe (8) mit den verschiedenen Vergleichern ($9_1, 9_2 \ldots 9_i$) und dem Generator (1) von Standardsignalen verbunden ist, um das Aussenden des gleichen Standardsignals (A) durch den Generator (1) von Standardsignalen zu verursachen, solange, bis das durch das Mikrofon (7) erzeugte Sprachsignal, wenn die Person in diesem die Klangnachricht, die sie soeben gehört hat, wiederholt, dem Standardsignal (A) bezüglich dem oder den in Betracht gezogenen Parametern nicht mit einem bestimmten einstellbaren Annäherungsgrad entspricht.

2. Gerät nach Anspruch 1, dadurch gekennzeichnet, daß die verschiedenen Vergleicher ($9_1, 9_2 \ldots 9_i$) mit Hilfe von UND-Gattern ($12_1, 12_2 \ldots 12_{i-1}$) in Kaskade geschaltet sind, und daß der letzte Vergleicher ($9_i$) mit der Ausgangsstufe (8) verbunden ist, um ein Steuersignal (y) auszusenden, das auf dieser aufgebracht wird, um das Aussenden eines neuen folgenden Standardsignals (B) nur dann zu verursachen, wenn alle durch die verschiedenen Vergleicher ($9_1, 9_2 \ldots 9_i$) ausgeführten Vergleiche bezüglich der jeweiligen durch die Analyse in Betracht gezogenen Parameter zufriedenstellende Ergebnisse bringen.

3. Gerät nach einem der vorhergehenden Ansprüche, dadurch gekennzeichnet, daß eine Kontrollampe ($13_1, 13_2 \ldots 13_i$) mit dem Ausgang jedes Vergleichers ($9_1, 9_2 \ldots 9_i$) verbunden ist.

4. Gerät nach einem der vorhergehenden Ansprüche, dadurch gekennzeichnet, daß alle Vergleicher ($9_1, 9_2 \ldots 9_i$) durch Zuführeingänge und einen gemeinsamen Leiter (12) mit dem Pol eines Umschalters (11) verbunden sind, der mit einer Spannungsquelle geeigneter Polarität verbunden ist.

5. Gerät nach Anspruch 4, daudrch gekennzeichnet, daß der andere Pol des Umschalters (11) mit Hilfe von einzelnen Druckknopfschaltern ($14_1, 14_2 \ldots 14_i$) mit Zuführeingängen der jeweiligen Vergleicher ($9_1, 9_2 \ldots 9_i$) verbunden ist.

6. Gerät nach einem der vorhergehenden Ansprüche, dadurch gekennzeichnet, daß die Einrichtungen zum Einstellen des Vergleichsbereiches einen Regelungsknopf aufweisen, der jedem Vergleicher zugeordnet ist.

## Claims

1. Training apparatus for practising a mother tongue or a foreign language with regard to its complete assimilation comprising a generator (1) of standard signals (A) consisting of a moveable sound recording support (3) on which blocks of sound information are previously recorded independently from one another, like sentences or words expressed in the language to be assimilated by someone, and a reader (4) for reading these blocks of information which emits the standard signals, an electroacoustic transducer (5) connected with the generator of standard signals and emitting the standard information blocks as sounds so that these can be heard by a person, a microphone (7) in which the person speaks, means associated with the microphone for creating vocal signals ($a_1, a_2 \ldots a_n$) corresponding to the sounds emitted by the person, and a circuit (6) for analysis and comparison of the standard signals with the vocal signals, characterized in that the analysis and comparison circuit (6) consists of several comparators having two inputs ($9_1, 9_2 \ldots 9_i$) and an output (8), each of these comparators having a first input connected to the output of the generator (1) of standard signals and a second input connected to the microphone (7) to be able to make an elementary comparison concerning one of several parameters like the intensity, the rhythm, the shope and the range of the pass-band, the latent period, the precession time, the sound attack, the ending of sounds, etc., between the standard signal (A) emitted by the generator (1) of standard signals and the vocal

signal ($a_1$, $a_2$ ... $a_n$) corresponding to the sound message pronounced by the person (2) in response to the audition of the emitted standard information block, and in that it contains regulation means permitting to adjust separately for each of said comparators the comparison range in which the result of the comparison is considered being good, the output stage (8) being connected to the different comparators ($9_1$, $9_2$ ... $9_i$) and to the generator (1) of standard signals so as to provoke the emission by the generator (1) of standard signals of the same standard signal (A) as long as the vocal signal produced by the microphone (7) when the person repeats in it the sound message which he just heard does not correspond within an adjustable determinated degree of approximation to the standard signal (A) with respect to the parameter or parameters taken into consideration.

2. Apparatus according to claim 1, characterized in that the several comparators ($9_1$, $9_2$ ... $9_i$) are connected one after the other by means of AND-gates ($12_1$, $12_2$ ... $12_{i-1}$) an the last comparator ($9_i$) is connected to the output stage (8) so as to emit a control signal (y) applied to it for provoking the emission of a following new standard signal (B) only when the comparisons executed by the several comparators ($9_1$, $9_2$ ... $9_i$) with respect to the respective parameters taken into consideration by the analysis have all given satisfying results.

3. Apparatus according to one of the preceding claims, characterized in that an indicator ($13_1$, $13_2$ ... $13_i$) is connected to the output of each of the comparators ($9_1$, $9_2$ ... $9_i$).

4. Apparatus according to one of the preceding claims, characterized in that all the comparators ($9_1$, $9_2$ ... $9_i$) are connected by means of supply gates and a common conductor (12) to a pole of a switch (11) connected to a voltage source having an appropriate polarity.

5. Apparatus according to claim 4, characterized in that the other pole of the switch (11) is connected by means of individual press-button switches ($14_1$, $14_2$ ... $14_i$) to supply inputs of the respective comparators ($9_1$, $9_2$ ... $9_i$).

6. Apparatus according to one of the preceding claims, characterized in that said means for regulating the comparison range contains a regulating button associated to each comparator.

Fig.1

Fig.2